# EUROPÄISCHE PATENTSCHRIFT

(11) **EP 1 358 447 B1**
(45) Veröffentlichungstag und Bekanntmachung des Hinweises auf die Patenterteilung: **08.07.2009**
(21) Anmeldenummer: 01990345.9
(22) Anmeldetag: 20.12.2001
(51) Int. Cl.: G01C 21/36, G08G 1/0969

(54) **FAHRZEUGNAVIGATIONSSYSTEM**
VEHICLE NAVIGATION SYSTEM
SYSTEME DE NAVIGATION DE VEHICULE

(30) Priorität: 28.12.2000 DE 10065523
(43) Veröffentlichungstag der Anmeldung: 05.11.2003
(73) Patentinhaber: ROBERT BOSCH GMBH, 70442 Stuttgart (DE)
(72) Erfinder: RENTEL, Joachim, 31180 Giesen (DE)
(86) Internationale Anmeldenummer: PCT/DE2001/004828
(87) Internationale Veröffentlichungsnummer: WO 2002/054012

(56) Entgegenhaltungen:
- EP-A- 0 996 267
- EP-A- 1 030 166
- DE-A- 19 531 415

## Beschreibung

### STAND DER TECHNIK

Die vorliegende Erfindung betrifft ein Fahrzeugnavigationssystem mit einer Navigationskomponente und einer von der Navigationskomponente getrennten Benutzerschnittstelle.

Zweck solcher Navigationssysteme ist, anhand von in einem Speicher des Systems vorhandenen geographischen Daten und einer von einem Benutzer über die Schnittstelle eingegebenen Suchanfrage, z.B. der Angabe eines Fahrziels, eine mögliche Route zu dem Ziel zu ermitteln und die so ermittelte Information an den Benutzer auszugeben.

Ein großer Teil derartiger Fahrzeugnavigationssysteme gehört nicht zur Standardausrüstung von Fahrzeugen, sondern wird im wesentlichen in bestehenden Fahrzeugen nachgerüstet. Für einen optimalen Bedienkomfort eines solchen Navigationssystems wäre es an sich von Vorteil, wenn zum Eingeben einer Suchanfrage eine vollständige alphanumerische Tastatur und zum Anzeigen der Ergebnisse ein großformatiger Bildschirm zur Verfügung gestellt werden könnte. Hierfür reicht der Platz, der an einem Armaturenbrett oder einer Mittelkonsole eines Fahrzeugs zur Verfügung steht, bei weitem nicht aus.

Um den Platzbedarf eines solchen Systems zu reduzieren, sind Navigationssysteme, die aus einer Navigationskomponente, die einen Speicher für geographische Daten und einen Prozessor zum Erstellen von Navigationsinformationen anhand der geographischen Daten umfasst, entwickelt worden, bei denen die Funktion der Benutzerschnittstelle von einem speziell hierfür ausgerüsteten Autoradio wahrgenommen wird. Das heißt, das Autoradio stellt neben seinen normalen Funktionen die komplette Bedieneroberfläche der Navigationskomponente zur Verfügung. Ein derartiges Autoradio wird z.B. von der Firma Blaupunkt hergestellt. Die Kommunikation zwischen dem Autoradio und der Navigationskomponente erfolgt über einen CAN-Bus mit einem speziell entwickelten Protokoll. Es wird nicht damit gerechnet, dass dieses Protokollin der Zukunft von allen Autoradioherstellern übernommen werden wird.

Herkömmliche Navigationssysteme nutzen einen festen Satz an geographischen Daten, der meist auf optischen Datenträgern wie etwa CDs gespeichert ist. Derartige Systeme können zwar einen Benutzer in Kenntnis des Start- und Zielpunkts einer Reise einen Routenvorschlag unterbreiten und gestützt auf im Laufe des Weges empfangene Information über den jeweiligen Aufenthaltsort des Fahrzeugs den Fahrer mit unterstützender Information versorgen, die es ihm erleichtert, die vorgeschlagene Route zu verfolgen; sie sind jedoch nicht in der Lage, kurzfristige Änderungen der Verkehrslage wie etwa Baustellen, Staus etc. zu berücksichtigen, die für den Fahrer bei der Entscheidung für oder gegen eine vorgeschlagene Route durchaus erheblich sein können. Um Staus aus dem Wege zu gehen, ist auch der Fahrer, der über ein Navigationssystem in seinem Fahrzeug verfügt, darauf angewiesen, Verkehrsmeldungen im Radio abzuhören, die TMC-Verkehrsmeldungen auszuwerten oder sie sich von kommerziellen Telematikdiensten zu beschaffen, die diese Informationen über das GSM-Mobilfunknetz verbreiten.

Weiterentwickelte Navigationssysteme verfügen über eine sogenannte Telematikbox als eine zusätzliche Funktionskomponente, die die aktuellen Verkehrsinformationen der Telematikanbieter über ein spezialisiertes, nicht handelsübliches Mobiltelefon empfängt und mit der Navigationskomponente und dem Autoradio ebenfalls über den CAN-Bus kommuniziert. Die Kosten eines solchen Systems sind aufgrund der Vielzahl der Komponenten und der zumindest bislang noch geringen Stückzahlen hoch.

EP-A-1 030 166 offenbart ein Funkschnittstelle zur Kontaktierung eines externen Service-Providers

EP-A-0 996 267 offenbart ein universelle Schnittstelleneinrichtung zur Bedienung verschiedener in einem Kraftfahrzeug vorhandener Geräte, wie Mobiltelefon und Navigationssystem.

Es besteht daher erheblicher Bedarf nach einem Fahrzeugnavigationssystem, das in einem Fahrzeug leicht nachrüstbar ist, das in großen Stückzahlen gefertigte, preiswerte Komponenten einsetzt und das dennoch den gleichen oder gar einen besseren Bedienkomfort als herkömmliche Systeme bietet.

### VORTEILE DER ERFINDUNG

Die Erfindung schafft ein Fahrzeugnavigationssystem mit den Merkmalen des Anspruchs 1. Weiterbildungen sind Gegenstand der Unteransprüche.

Grundgedanke der Erfindung ist, das Autoradio als Benutzerschnittstelle durch ein gängiges Mobiltelefon zu ersetzen. Mobiltelefone, z.B. nach der GSM-Norm, verfügen zwangsläufig über ein Tastenfeld zur Eingabe von Rufnummern, das auch zur Eingabe von Buchstaben geeignet ist und das in einer Regel auch bereits zu diesem Zweck, etwa beim Editieren von Telefonbucheinträgen, genutzt wird. Mit Hilfe eines solchen Tastenfeldes läßt sich eine Suchanfrage an die Navigationskomponente einfacher und schneller formulieren, als wenn z.B. bei einem Autoradio auf dessen Anzeigefeld ein Alphabet dargestellt wird und ein Benutzer gezwungen ist, durch Bewegen eines Cursors jeden Buchstaben einzeln auszuwählen. Das bei Mobiltelefonen ebenfalls notwendigerweise vorhandene Anzeigefeld kann genutzt werden, um von der Navigationskomponente gelieferte alphanumerische Informationen anzuzeigen. Auch die Anzeige graphischer Informationen ist möglich. Außerdem ist damit zu rechnen, dass mit der Einführung des WAP-Standards Mobiltelefone mit größeren und komfortableren Anzeigeschirmen als denen gegenwärtiger Modelle in naher Zukunft preiswert und in großen Stückzahlen verfügbar sein werden.

Für die Kommunikation zwischen dem Mobiltelefon und der Navigationskomponente kann eine serielle Schnittstelle eingesetzt werden, wie sie z.B. in der GSM-Norm 07.05 V5.5.0 definiert ist.

Um von der Navigationskomponente gelieferte Audioinformation auszugeben, kann eine an das Mobiltelefon angeschlossene Freisprechanlage genutzt werden. Da eine solche Freisprechanlage in den meisten Kraftfahrzeugen vorhanden ist, in denen ein Mobiltelefon benutzt wird, ist somit die Möglichkeit der Ausgabe von Audioinformation für den Käufer eines erfindungsgemäßen Fahrzeugnavigationssystems mit keinerlei Mehrkosten verbunden.

Über die Schnittstelle zwischen der Navigationskomponente und dem Mobiltelefon können jedoch nicht nur Anfragen vom Mobiltelefon an die Navigationskomponente und in Anwort darauf von der Navigationskomponente gelieferte Informationen zurück an das Mobiltelefon übertragen werden, sondern die Speicher- und Verarbeitungskapazität der Navigationskomponente kann darüber hinaus genutzt werden, um die Leistungsmerkmale des Mobiltelefons zu erweitern. So kann insbesondere die Navigationskomponente zusätzlich zu den geographischen Daten einen Speicher für mit Hilfe des Mobiltelefons kontaktierbar Endgeräteadressen umfassen, und das Mobiltelefon kann eingerichtet sein, um auf diesen Speicher zum Kontaktieren eines entfernten Endgeräts in der gleichen Weise zuzugreifen wie auf ein internes Rufnummernverzeichnis.

Zu den mit Hilfe des Mobiltelefons kontaktierbaren Endgeräteadressen zählen nicht nur Rufnummern anderer Telefone, es können auch E-Mail Adressen zur automatischen Einfügung in SMS-Nachrichten in diesen Speicher aufgenommen werden.

Ein weiterer Vorteil, der sich aus der Einbindung des Mobiltelefons in das Fahrzeugnavigationssystem ergibt, ist der, dass es mit Hilfe des Mobiltelefons einfach möglich ist, eine von der Navigationskomponente erzeugte Information über die aktuelle Position des Fahrzeugs zu senden. Auf diese Weise kann ein mit dem erfindungsgemäßen Navigationssystem ausgestattetes Fahrzeug auf einfache Weise in ein Flottenmanagement-System eingebunden werden, wobei die Positionsinformation turnusmäßig auf Initiative des Navigationssystems oder auf Anfrage einer Flottenmanagement-Zentrale an diese gesendet werden kann. Des weiteren kann eine solche Positionsmeldung in eine Notrufmeldung eingefügt werden, die z.B. automatisch bei einem Unfall oder auf Befehl des Benutzers gesendet wird.

In vielen Fällen enthält der Speicher der Navigationskomponente nicht nur die reinen geographischen Daten, die vom Prozessor zum Erstellen der Navigationsinformationen genutzt werden, sondern darüber hinaus noch alphanumerische Daten, auch als "Reiseführerinformationen" bezeichnet, die dem Benutzer im wesentlichen unverarbeitet als Antwort auf eine Anfrage angezeigt werden können. In einem solchen Fall ist es vorteilhaft, wenn das Navigationssystem ferner einen Filter zum Identifizieren von.mit Hilfe des Mobiltelefons kontaktierbaren Endgeräteadressen in dieser alphanumerischen Information und zum Übergeben einer identifizierten Endgeräteadresse an das Mobiltelefon umfasst, das daraufhin eine Verbindung zu dem mit der Adresse bezeichneten Endgerät aufbauen kann. Dieser Filter kann manuell betätigt werden, z.B. in dem der Benutzer die Möglichkeit erhält, in einer angezeigten alphanumerischen Information eine Adresse als zu kontaktierend auszuwählen; es kann aber auch ein automatisches Filter vorgesehen werden, das eine solche Endgeräteadresse anhand ihrer Syntax identifiziert.

Um dem Fahrzeugnavigationssystem die Berücksichtigung aktueller Verkehrszustandsinformationen zu ermöglichen, ist zweckmäßigerweise ein Übertragungsweg für von dem Mobiltelefon per Funk empfangene ergänzende geographische Daten an die Navigationskomponente vorgesehen. Ein solcher Übertragungsweg kann z.B. dadurch aufgebaut sein, dass das Mobiltelefon selbst empfangene Daten, insbesondere SMS-Nachrichten, auf das Vorhandensein eines vorgegebenen Merkmals oder die Herkunft von einem bestimmten Absender untersucht, die als Kriterien dafür dienen können, dass die Nachricht ergänzende geographische Daten enthält, die zur Auswertung durch die Navigationskomponente bestimmt sind, und die solcherart gekennzeichneten Nachrichten an die Navigationskomponente weitergibt. Eine andere Lösung, die keine speziellen Fähigkeiten des Mobiltelefons erfordert, ist die, dass die Navigationskomponente über den Übertragungsweg alLe am Mobiltelefon eingehenden Nachrichten "mithört", daraus anhand des Merkmals oder der Absenderkennung die für sie bestimmten Nachrichten auswählt und verarbeitet und alle anderen ignoriert.

Zweckmäßigerweise umfasst der Speicher ein Datenträgerlesegerät und einen austauschbaren Datenträger für die geographischen Daten. In einem solchen Fall sind auf dem austauschbaren Datenträger ferner vorteilhafterweise Programminformationen gespeichert, die der Prozessor der Navigationskomponente bei der Auswertung von per Funk erhaltenen ergänzenden geographischen Daten einsetzt. Diese Programmkomponenten können jeweils spezifisch an ein Nachrichtenformat angepasst sein, dass ein bestimmter Telematik-Dienstleister für von ihm versendete Verkehrszustandsinformationen verwendet. So kann durch einen einfachen Austausch des Datenträgers das Navigationssystem auf die Nutzung von Informationen eines anderen Dienstleisters umgestellt werden. Dies ist besonders bei grenzüberschreitenden Fahrten vorteilhaft: Wenn an der Landesgrenze der Datenträger ausgetauscht wird, so ist dadurch das Navigationssystem automatisch auch an ein möglicherweise abweichendes Nachrichtenformat eines Telenmatik-Dienstleisters in dem Nachbarland angepasst.

Eine weitere Möglichkeit, die sich aus der Verwendung eines Lesegeräts mit austauschbarem Datenträger ergibt, ist die, dass ein Benutzer anstelle des Datenträgers mit den geographischen Daten einen beliebigen anderen kompatiblen Datenträger in das Lesegerät einlegen und auf diesem gespeicherte Daten von der Navigationskomponente an das Mobiltelefon zur Ausstrahlung übermitteln lassen kann.

### ZEICHNUNGEN

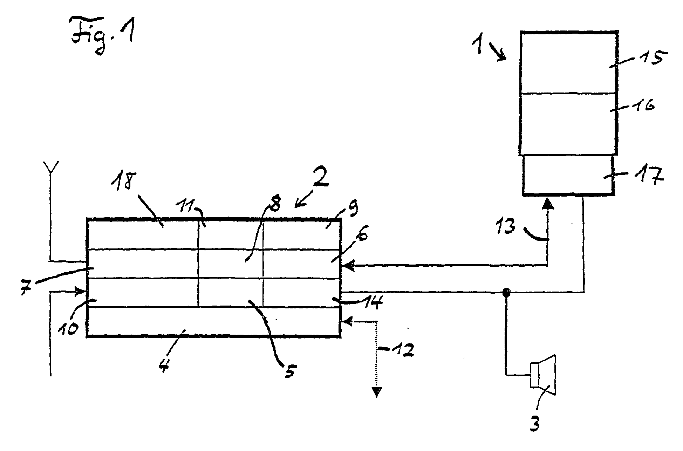

Weitere Merkmale und Vorteile der vorliegenden Erfindung ergeben sich aus der nachfolgenden Beschreibung von Ausführungsbeispielen mit Bezug auf die beigefügte Figur.

Die einzige Figur zeigt eine Prinzipskizze eines erfindungsgemäßen Fahrzeugnavigationssystems.

Das System besteht im wesentlichen aus zwei Komponenten, einem Mobiltelefon 1, hier einem GSM-Handy mit einem Handyanschluß 17, und einer Navigationskomponente 2, die miteinander über eine Schnittstelle, z.B. eine serielle Schnittstelle 13 vom Typ RS232 verbunden sind.

Optional können Mobiltelefon 1 und Navigationskomponente 2 ferner mit einem Lautsprecher 3 einer Freisprechanlage verbunden sein, um Audiosignale an diesen auszugeben.

Die Navigationskomponente 2 umfasst unter anderem die folgenden Elemente:
- ein Netzteil 18;
- einen Speicher mit einem CD-ROM-Laufwerk 4, in das eine CD-ROM als Datenträger für geographische Daten einlegbar ist, anhand derer die Navigationskomponente 2 Navigationsinformationen für einen Benutzer erstellt, einem Schreib-Lese-Halbleiterspeicher (RAM)5 und einem nichtflüchtigen Halbleiterspeicher 11, z.B. einem Flash-EPROM;
- eine Schnittstellenschaltung 6 für die Kommunikation mit dem Mobiltelefon 1;
- einen GPS-Empfänger 7, der anhand eines über eine Antenne empfangenen Satellitensignals eine Information über den Aufenthaltsort des Systems bereitstellt; und
- einen Prozessor (CPU) 8, der auf eine über die serielle Schnittstelle 13 von dem Mobiltelefon 1 empfangene Anfrage hin Navigationsinformationen anhand der im Speicher enthaltenen geographischen Daten und der vom GPS-Empfänger 7 gelieferten Positionsinformationen erstellt.

Um die Genauigkeit der Positionsbestimmung zu steigern, ist die Navigationskomponente 2 ferner mit einem Kreiselkompass 9 und einem Eingang 10 für ein Fahrzeuggeschwindigkeitssignal ausgestattet, die von dem Prozessor 8 bei der Ermittlung des Aufenthaltsorts mitberücksichtigt werden. Das Mobiltelefon 1 entspricht der GSM-Spezifikation "Digital Cellular Telecommunications System (Phase 2+); AT Command Set for GSM Mobile Equipment (GSM07.07)", Version 5.5.0 des European Telecommunication Standard Institute (ETSI). Diese Spezifikation definiert eine abstrakte Architektur für die Kommunikation eines Mobiltelefons mit einem angeschlossenen Datenendgerät, bestehend aus den Komponenten Mobile Equipment (ME), Terminal Adapter (TA) und Terminal Equipment (TE). Im Rahmen des Navigationssystems ist vorgesehen, dass die Funktion des Terminal Adapter und des Mobile Equipment in einem GSM Phase 2+-Handy integriert sind, wohingegen die Terminal Equipment Funktion von der Navigationskomponente 2 wahrgenommen wird. Terminal Equipment und Terminal Adapter kommunizieren mit Hilfe sogenannter AT-Cellular-Befehle, die der Navigationskomponente 2 weitgehende Kontrolle über die Funktionen des Mobiltelefons 1 geben. So definiert die genannte ETSI-Spezifikation Befehle zum Ausgeben von Zeichen auf dem Anzeigefeld des Mobiltelefons, zum Abfragen von Eingaben auf dessen Tastatur und zum Simulieren von Tastenbetätigungen am Mobiltelefon. Auch Befehle zum Eingeben eines PIN-Code, zum Abfragen der Stärke des Empfangssignals und zum Steuern eines Energiesparmodus des Mobiltelefons sind definiert.

Durch einen Event-Reporting-Mechanismus erhält die Navigationskomponente 2 jeden Tastendruck, jede Displayänderung und jede Änderung einer Symbolanzeige an dem Mobiltelefon 1 mitgeteilt. Damit sind sämtliche Funktionen vorhanden, die benötigt werden, um ein solches Mobiltelefon als eine Benutzerschnittstelle für ein Fahrzeugnavigationssystem nutzen zu können. Die Eingabe eines Textes, insbesondere eines Fahrziels erfolgt nach dem für Mobiltelefone hinlänglich bekannten Prinzip, bei dem den Zifferntasten eines Tastaturfeldes 16 des Mobiltelefons jeweils eine Mehrzahl von alphanumerischen Zeichen zugeordnet sind, die durch wiederholtes Drücken der Taste selektiert werden können.

Für die Ausgabe von Navigationsinformationen in Textform kann der in der oben erwähnten Norm definierte Befehl +CDIS verwendet werden. Eine Anpassung des Formats der Textanzeige an je nach Modell des Mobiltelefons 1 unterschiedliche Größen von dessen Anzeigefeld 15 ist möglich, in dem der Prozessor 8 mit Hilfe der Befehle +CMEC=? und +CDIS=? die Zahl der auf dem Anzeigefeld verfügbaren Zeilen und Spalten abfragt.

Auch die Anzeige graphischer Symbole ist möglich, indem diese aus mehreren alphanumerischen Zeichen zusammengesetzt werden.

Einer weiterentwickelten Ausgestaltung zufolge ist die Navigationskomponente 2 ferner mit einer Sprachausgabeschaltung 14 ausgestattet, die es ermöglicht, eine auf der im CD-ROM-Laufwerk 4 befindlichen CD-ROM in digitalisierter Form gespeicherte Ansage oder auch eine aus einer Zeichenkette generierte Ansage an den Lautsprecher 3 der Freisprecheinrichtung auszugeben. Auf diese Weise kann ein Fahrer effektiv mit Navigationsinformationen versorgt werden, selbst wenn er in einem komplizierten Verkehrsgeschehen keine Möglichkeit hat, auf das Anzeigefeld des Mobiltelefons zu schauen.

Einer weiteren, nicht dargestellten Weiterentwicklung zufolge ist es auch denkbar, die Navigationskomponente 2 mit einer Spracherkennungsschaltung auszurüsten, um von einem Mikrofon der Freisprechanlage aufgezeichnete, vom Fahrer gesprochene Befehle an die Navigationskomponente 2 zu erkennen und umzusetzen.

Die GSM-Norm 07.05 V5.5.0 unterstützt auch Versendung und Empfang von SMS-Nachrichten durch ein angeschlossenes Endgerät über ein normkonformes Handy. Es ist daher möglich, mit dem Mobiltelefon 1 SMS-Nachrichten von Telematik-Dienstleistern zu empfangen, die Informationen über Verkehrsbehinderungen enthalten, und diese Informationen an die Navigationskomponente 2 weiterzugeben, wo sie vom Prozessor 8 ausgewertet und im RAM 5 gespeichert werden, so dass sie als eine Ergänzung zu den auf der CD-ROM gespeicherten geographischen Informationen zur Verfügung stehen und bei der Erstellung von Navigationsinformationen mit berücksichtigt werden können.

Das Format dieser SMS-Nachrichten kann unterschiedlich sein, je nachdem, von welchem Telematik-Anbieter sie stammen. Um sicherzustellen, dass diese SMS-Nachrichten von der Navigationskomponente 2 korrekt ausgewertet werden können, ist es möglich, eine Bibliothek mit hierfür benötigten Programmfunktionen mit auf der CD-ROM im Laufwerk 4 unterzubringen, die auch die geographischen Daten enthält, und je nach empfangener Absenderkennung einer SMS-Nachricht aus dieser Bibliothek die zur Auswertung geeignete Funktion zu wählen.

Die Möglichkeit, über das Mobiltelefon 1 Kurznachrichten zu versenden, kann auch genutzt werden, um mit Hilfe des erfindungsgemäßen Navigationssystems Flottenmanagementsysteme preiswert zu implementieren. Die einzige Voraussetzung hierfür ist, dass die Navigationskomponente 2 mit einem Programm für den Prozessor 8 ausgestattet ist, das es diesem ermöglicht, zyklisch oder auf Anforderung von außen eine SMS-Nachricht auszusenden, die eine Information über den gegenwärtigen Aufenthaltsort des Systems enthält. Dabei kann die Navigationskomponente 2 noch genauere Informationen über den Aufenthaltsort liefern als herkömmliche, nur auf GPS basierende Flottenmanagementsysteme, weil sie in der Lage ist, zusätzlich zum GPS-Signal auch die gespeicherten geographischen Daten, die vom Drehratensensor 9 gelieferte Richtungsinformation und die über den Signaleingang 10 empfangene Geschwindigkeitsinformation zu berücksichtigen und z.B. unter allen mit einem empfangenen GPS-Signal kompatiblen möglichen Aufenthaltsorten alle solche Orte als aktuelle Aufenthaltsorte auszuschließen, an denen sich gemäß den geographischen Daten keine Straße befindet. Selbstverständlich kann der Prozessor 8 auch zu einem früheren Zeitpunkt innegehabte Positionen auswerten, um unter mehreren mit einem GPS-Signal kompatiblen Straßen diejenige zu ermitteln, auf der sich das Fahrzeug befindet.

Das Mobiltelefon 1 benötigt zum ordnungsgemäßen Funktionieren eine SIM-Karte (nicht gezeigt), auf der spezifische Daten des Benutzers des Mobiltelefons gespeichert sind. Die SIM-Karte enthält auch einen beschreibbaren Speicher, der zur Speicherung von Telefonnummern und SMS-Nachrichten genutzt werden kann. Die Größe dieses Speichers ist allerdings begrenzt. So können z.B. bei D1 zur Zeit nur 14 SMS-Nachrichten auf der SIM-Karte gespeichert werden. Der nichtflüchtige Speicher 11 der Navigationskomponente 2 ist erheblich größer als der Speicher der SIM-Karte und ist in der Lage, neben Zielspeicherinformationen, Fahrzeugparametern etc. eine sehr große Anzahl an Telefonnummern und SMS-Nachrichten permanent zu speichern. Dies hat bei gewerblicher Nutzung eines mit dem Navigationssystem ausgestatten Fahrzeugs den Vorteil, dass der Telefonnummernspeicher, der z.B. Kundenadressen enthalten kann, fest mit dem Fahrzeug verbunden ist und immer der gleiche bleibt, auch wenn verschiedene Fahrer mit jeweils persönlicher SIM-Karte das Fahrzeug benutzen.

Dieser nichtflüchtige Speicher 11 kann auch zum Speichern von E-Mail Adressen genutzt werden. Durch Setzen einer E-Mail Adresse am Beginn einer SMS-Nachricht und Senden dieser SMS-Nachricht an ein bestimmtes Servicecenter wird von den Mobilnetzanbietern D1 und D2 diese SMS-Nachricht als E-Mail weitergesendet. Herkömmliche Handys haben keinen Adressenspeicher für E-Mail Adressen. In dem nichtflüchtigen Speicher der Navigationskomponente hingegen können auch solche E-Mail Adressen aufgenommen werden. Anstatt eine E-Mail Adresse jedesmal von neuem einzutippen, kann ein Benutzer daher eine solche Adresse im Verzeichnis der Navigationskomponente auswählen und sie vollautomatisch der SMS-Nachricht voranstellen lassen.

Oben wurde bereits in Verbindung mit Flottenmanagement die Möglichkeit erwähnt, mit dem erfindungsgemäßen Navigationssystem automatisch SMS-Nachrichten zu erzeugen, die eine Angabe über den aktuellen Aufenthaltsort des Systems enthalten. Eine solche Angabe, gegebenenfalls in Verbindung mit der zugehörigen Uhrzeit, kann natürlich auf einen Befehl des Benutzers hin auch in eine beliebige andere SMS-Nachricht automatisch integriert werden.

Vielfach enthält die CD-ROM nicht nur die geographischen Daten, die von der Navigationskomponente 2 zum Stellen eines Routenvorschlags benötigt werden, sondern auch eine _{"}Reiseführerdatenbank" die für einen gegebenen Ort Informationen über Sehenswürdigkeiten, Hotels, Gaststätten, Kinos, Autowerkstätten und anderes zusammen mit Adressen und Telefonnummern enthalten kann. Selbstverständlich kann auch der Inhalt einer solchen Reiseführerdatenbank über die Navigationskomponente 2 auf dem Anzeigefeld des Mobiltelefons 1 zur Anzeige gebracht werden. Wenn der Benutzer eine angezeigte Rufnummer z.B. durch Bewegen eines Cursors auf dem Anzeigefeld markiert, so kann vorgesehen werden, dass in einem solchen Fall die Navigationskomponente 2 das Mobiltelefon 1 automatisch ansteuert, um eine Gesprächsverbindung mit der angewählten Nummer herzustellen. Eine weitere, durch eine entsprechende Programmierung des Prozessors 8 ohne weiteres zu realisierende und in Anbetracht der beschränkten Größe des Anzeigefeldes des Mobiltelefons 1 komfortablere Möglichkeit ist die, dass der Prozessor Telefonnummern in der Reiseführerdatenbank z.B. anhand einer vorangestellten Abkürzung "Tel." oder ihres Formats automatisch ausfiltert, diese Telefonnummer dann nicht zur Anzeige bringt, wohl aber andere in der Reisedatenbank zu dem Telefonnummerninhaber gespeicherte Information, im Falle eines Hotels z.B. Bettenzahl, Leistungsmerkmale, Adresse etc., und die Verbindung automatisch herstellt, wenn der Benutzer lediglich den Namen des Telefonnummerninhabers anwählt.

Einer anderen Weiterentwicklung zufolge kann das erfindungsgemäße System auch zum Zugriff auf andere in dem CD-ROM-Laufwerk 4 lesbare Datenträger eingesetzt werden. So kann das laufwerk 4 z.B. auch zum Abspielen von Audio-CDs über den Lautsprecher 3 der Freisprechanlage oder in Zusammenwirkung mit einem optionsweise über eine Verbindung 12 angeschlossenen Autoradio eingesetzt werden.

Auch der Zugriff auf beliebige Datenbanken auf CD, z.B. Lexika, Adressendateien, Telefonauskunft, Erste-Hilfe Anweisungen etc. ist hier leicht realisierbar. Für die Steuerung des Zugriffs auf solche Anwendungen kann der Prozessor 8 mit einem einfachen Betriebssystem ähnlich dem herkömmlicher Palmtop-Computer ausgestattet sein. Auch bei solchen Anwendungen besteht die Möglichkeit, wie oben beschrieben Gesprächsverbindungen zu gespeicherten Telefonnummern automatisch aufzubauen.

Bei einer abermaligen Weiterentwicklung des Systems ist vorgesehen, dass dem Benutzer die Möglichkeit gegeben wird, auf dem Anzeigefeld des Mobiltelefons 1 Datensätze eines im Laufwerk 4 befindlichen Datenträgers auszuwählen und diese Datensätze über das Mobiltelefon 1 an einen Partner zu übertragen. Dies erlaubt es z.B. einen Außendienstmitarbeiter einer Firma, der eine CD-ROM mit technischen Informationen, Prospektmaterial oder Preislisten seiner Firma mit sich führt, solches Informationsmaterial auf Anfrage unverzüglich zu versenden.

Dabei ist zu beachten, dass alle diese Funktionen mit einem Mobiltelefon realisiert werden können, das keinerlei spezifische Anpassung an die vorliegende Erfindung benötigt, sofern es nur die in der Norm GSM 07.07 V5.5.0 definierten Befehle für die Kommunikation mit einem angeschlossenen Endgerät oder äquivalente Befehle unterstützt.

## Patentansprüche

1. Fahrzeugnavigationssystem mit einer Navigationskomponente (2), die einen Speicher (4, 5, 11) für geographische Daten und einen Prozessor (8) zum Erstellen von Navigationsinformationen anhand der geographischen Daten umfasst, und einer Benutzerschnittstelle (1) zum Eingeben von Anfragen an die Navigationskomponente (2) und zum Anzeigen von von der Navigationskomponente (2) gelieferten Navigationsinformationen, **dadurch gekennzeichnet, dass** die Benutzerschnittstelle ein Mobiltelefon (1) ist.

2. Fahrzeugnavigationssystem nach Anspruch 1, **dadurch gekennzeichnet, dass** das Mobiltelefon (1) über eine serielle Schnittstelle (3) an die Navigationskomponente (2) gekoppelt ist

3. Fahrzeugnavigationssystem nach Anspruch 1 oder 2, **dadurch gekennzeichnet, dass** das Mobiltelefon (1) eingerichtet ist, von der Navigationskomponente (2) gelieferte alphanumerische oder graphische Information auf einem Anzeigefeld (15) auszugeben.

4. Fahrzeugnavigationssystem nach einem der vorhergehenden Ansprüche, **dadurch gekennzeichnet, dass** das Mobiltelefon (1) an eine Freisprechanlage zum Ausgeben von von der Navigationskomponente (2) gelieferter Audioinformation und/oder zum Eingeben einer Anfrage an die Navigationskomponente angeschlossen ist.

5. Fahrzeugnavigationssystem nach einem der vorhergehenden Ansprüche, **dadurch gekennzeichnet, dass** die Navigationskomponente (2) ferner einen Speicher (11) für mit Hilfe des Mobiltelefons kontaktierbare Endgeräteadressen umfasst, und dass das Mobiltelefon (1) eingerichtet ist, auf diesen Speicher (11) zum Kontaktieren eines entfernten Endgeräts zuzugreifen.

6. Fahrzeugnavigationssystem nach einem der vorhergehenden Ansprüche, **dadurch gekennzeichnet, dass** es eingerichtet ist, eine von der Navigationskomponente (2) erzeugte Information über seine aktuelle Position mit Hilfe des Mobiltelefons (1) zu senden.

7. Fahrzeugnavigationssystem nach einem der vorhergehenden Ansprüche, **dadurch gekennzeichnet, dass** der Speicher (4, 5, 11) der Navigationskomponente (2) alphanumerische Informationen umfasst, und dass ein Filter (8) zum Identifizieren von mit Hilfe des Mobiltelefons (1) kontaktierbaren Endgeräteadressen in der alphanumerischen Information und zum Übergeben einer identifizierten Endgeräteadresse an das Mobiltelefon (1) vorgesehen ist.

8. Fahrzeugnavigationssystem nach einem der vorhergehenden Ansprüche, **gekennzeichnet durch** einen Übertragungsweg für von dem Mobiltelefon (1) per Funk empfangene Daten an die Navigationskomponente (2).

9. Fahrzeugnavigationssystem nach Anspruch 8, **dadurch gekennzeichnet, dass** die Navigationskomponente (2) eine Einrichtung (8) zum Identifizieren und Auswerten von solchen von dem Mobiltelefon (1) per Funk empfangenen Daten aufweist, die ergänzende geographische Daten enthalten.

10. Fahrzeugnavigationssystem nach Anspruch 9 und Anspruch 10, **dadurch gekennzeichnet, dass** auf dem austauschbaren Datenträger ferner Programminformationen gespeichert sind, die die Navigationskomponente (2) bei der Auswertung der ergänzenden geographischen Daten einsetzt.

11. Fahrzeugnavigationssystem nach Anspruch 10 oder 11, **dadurch gekennzeichnet, dass** die Navigationskomponente (2) eingerichtet ist, einen auf einem in das Lesegerät (4) eingelegten Datenträger gespeicherten Datensatz an das Mobiltelefon (1) zur Ausstrahlung zu übermitteln.

## Claims

1. Vehicle navigation system having a navigation component (2), which comprises a memory (4, 5, 11) for geographical data and a processor (8) for creating navigation information using the geographical data, and a user interface (1) for inputting requests to the navigation component (2) and for displaying navigation information delivered by the navigation component (2), **characterized in that** the user interface is a mobile telephone (1).

2. Vehicle navigation system according to Claim 1, **characterized in that** the mobile telephone (1) is coupled to the navigation component (2) by means of a serial interface (3).

3. Vehicle navigation system according to Claim 1 or 2, **characterized in that** the mobile telephone (1) is set up to output alpha numeric or graphical information delivered by the navigation component (2) on a display panel (15).

4. Vehicle navigation system according to one of the preceding claims, **characterized in that** the mobile telephone (1) is connected to a hands-free installation for outputting audio information delivered by the navigation component (2) and/or for inputting a request to the navigation component.

5. Vehicle navigation system according to one of the preceding claims, **characterized in that** the navigation component (2) also comprises a memory (11) for terminal addresses which can be contacted using the mobile telephone, and **in that** the mobile telephone (1) is set up to access this memory (11) for the purpose of contacting a remote terminal.

6. Vehicle navigation system according to one of the preceding claims, **characterized in that** it is set up to transmit a piece of information produced by the navigation component (2) about its current position using the mobile telephone (1).

7. Vehicle navigation system according to one of the preceding claims, **characterized in that** the memory (4, 5, 11) of the navigation component (2) comprises alphanumeric information, and **in that** a filter (8) is provided for the purpose of identifying terminal addresses which can be contacted using the mobile telephone (1) in the alphanumeric information and for the purpose of transferring an identified terminal address to the mobile telephone (1).

8. Vehicle navigation system according to one of the preceding claims, **characterized by** a transmission path for data received by the mobile telephone (1) by radio to the navigation component (2).

9. Vehicle navigation system according to Claim 8, **characterized in that** the navigation component (2) has a device (8) for identifying and evaluating data received by the mobile telephone (1) by radio which contain supplementary geographical data.

10. Vehicle navigation system according to Claim 9, **characterized in that** the replaceable data storage medium also stores program information which the navigation component (2) uses when evaluating the supplementary geographical data.

11. Vehicle navigation system according to Claim 10 or 11, **characterized in that** the navigation component (2) is set up to transmit a data record stored on a data storage medium inserted into the reader (4) to the mobile telephone (1) for emission.

## Revendications

1. Système de navigation pour véhicule comprenant un composant de navigation (2) qui inclut une mémoire (4, 5, 11) pour des données géographiques et un processeur (8) pour créer des informations de navigation au moyen des données géographiques, et une interface d'utilisateur (1) pour saisir des demandes auprès du système de navigation (2) et pour afficher les informations de navigation délivrées par le système de navigation (2), **caractérisé en ce que** l'interface d'utilisateur est un téléphone mobile (1).

2. Système de navigation pour véhicule selon la revendication 1, **caractérisé en ce que** le téléphone mobile (1) est connecté au composant de navigation (2) par le biais d'une interface série (3).

3. Système de navigation pour véhicule selon la revendication 1 ou 2, **caractérisé en ce que** le téléphone mobile (1) est configuré pour présenter sur une zone d'affichage (15) les informations alphanumériques ou graphiques délivrées par le composant de navigation (2).

4. Système de navigation pour véhicule selon l'une des revendications précédentes, **caractérisé en ce que** le téléphone mobile (1) est raccordé à un équipement à mains libres pour diffuser les informations audio délivrées par le composant de navigation (2) et/ou pour entrer une demande adressée au composant de navigation.

5. Système de navigation pour véhicule selon l'une des revendications précédentes, **caractérisé en ce que** le composant de navigation (2) comprend en plus une mémoire (11) pour des adresses de terminaux avec lesquels peut être établi un contact à l'aide du téléphone mobile, et que le téléphone mobile (1) est configuré pour accéder à cette mémoire (11) afin d'entrer en contact avec un terminal distant.

6. Système de navigation pour véhicule selon l'une des revendications précédentes, **caractérisé en ce qu'**il est configuré pour envoyer à l'aide du téléphone mobile (1) une information sur sa position actuelle générée par le composant de navigation (2).

7. Système de navigation pour véhicule selon l'une des revendications précédentes, **caractérisé en ce que** la mémoire (4, 5, 11) du composant de navigation (2) comprend des informations alphanumériques et qu'il est prévu un filtre (8) pour identifier dans les informations alphanumériques les adresses de terminaux avec lesquels peut être établi un contact à l'aide du téléphone mobile (1) et pour transmettre au téléphone mobile (1) une adresse de terminal identifiée.

8. Système de navigation pour véhicule selon l'une des revendications précédentes, **caractérisé par** une voie de transmission au composant de navigation (2) des données reçues par voie hertzienne par le téléphone mobile (1).

9. Système de navigation pour véhicule selon la revendication 8, **caractérisé en ce que** le composant de navigation (2) présente un dispositif (8) pour identifier et analyser les données reçues par voie hertzienne par le téléphone mobile (1) qui contiennent des données géographiques complémentaires.

10. Système de navigation pour véhicule selon la revendication 9, **caractérisé en ce que** le support de données interchangeable contient en plus des informations de programme qui sont utilisées par le composant de navigation (2) lors de l'analyse des données géographiques complémentaires.

11. Système de navigation pour véhicule selon la revendication 10 ou 11, **caractérisé en ce que** le composant de navigation (2) est configuré pour communiquer au téléphone mobile (1), en vue de sa diffusion, un jeu de données enregistré sur un support de données inséré dans le lecteur (4).
